# EUROPEAN PATENT APPLICATION

(11) **EP 1 158 707 A1**
(43) Date of publication of application: **28.11.2001**
(21) Application number: 00304473.2
(22) Date of filing: 25.05.2000
(51) Int. Cl.: H04H 1/00, H04N 7/08

(54) **Method and apparatus for the transmission of broadcasts**

(71) Applicant: LUCENT TECHNOLOGIES INC., Murray Hill, New Jersey 07974-0636 (US)
(72) Inventor: Gruhl, Stefan, 90443 Nürnberg (DE); Reichenbach, Jörg Arnt, 90402 Nuremberg (DE)
(74) Representative: Williams, David John

(57) **Abstract**

The invention relates to a method and apparatuses for improved transmission of broadcasts, which make it possible to ensure considerably more efficient utilization of available transmission channels, while at the same time allowing individual subscribers to make a more individual selection of a specific broadcast programme.

To do this, the invention provides that at least one first and one second signal sequence (5, 6, 7, 8, 9) having defined signal characteristics can be produced and can be transmitted, in which case a large number of information blocks are embedded in the first signal sequence (5), and control information referring to individual information blocks is embedded in the second signal sequence (6, 7, 8, 9) in such a way that a receiver device (2) which is matched to the signal characteristics accesses the information block associated with the control information in response to control information being received in a selected second signal sequence (6, 7, 8, 9).

An apparatus is provided for the reception of such broadcasts, having devices (2), which separates a first and a second signal sequence (5, 6, 7, 8, 9) from a number of first and second signal sequences having defined signal characteristics, and accesses an information block associated with specific control information, from the first signal sequence (5), in response to such control information contained in the second signal sequence (6, 7, 8, 9).

## Description

The invention relates to a method for the transmission of broadcasts, apparatuses which are suitable for carrying out the method, and a suitable apparatus for the reception of broadcasts transmitted using the method.

Traditional entertainment and information programmes, such as those which can be received via the television or the radio, are transmitted, in particular, as broadcast programmes. One distinguishing characteristic of such broadcasts is the fact that they are intended for a defined class of receiver equipment, in each case originating from a transmitter or a source. For example, the broadcast from a radio transmitter can thus be received by an essentially unlimited number of people.

A broadcast programme itself comprises a sequence (predetermined and defined by the source) of individual entertainment and/or information units. Such a unit may, for example, be a song, a television film, a sports event or a message block.

Conventionally, the connections provided for broadcast programmes are directed unidirectionally, that is to say the information flows in one direction. When a subscriber who may be one of the group of the people uses his receiver, which is suitable for this purpose on the basis of the addressed class of the receivers, to select a desired programme channel, he thus receives the programme that is governed by the source, that is to say the predetermined sequence of entertainment or information units, without being able to access individual, specific units directly. In other words, for example in contrast to the multimedia facilities available via the Internet, active selection of individual information units and/or subscriber-based composition of a personal programme are/is essentially not supported by traditional broadcast systems.

With reference to television transmissions, a method is known in which the subscriber is able to decode the exact start and end times, via an identification signal which is included in the transmission of the programme, by means of an appropriately adapted video recorder, in order to record selected television programmes at precise times.

Furthermore, a so-called Radio Data System (RDS) allows the reception and reproduction of additional information, applied to individual information units, particularly for sound-radio programmes transmitted in the VHF radio band.

Furthermore, identification signals are also frequently added to the transmitted signal for traffic radio reports. When such a signal is identified, for example, a radio which is set to the appropriate programme channel then applies the report to the loudspeaker, at a minimum volume level, for the duration of the report. Radio receivers are also already available which can store such reports for subsequent playback.

Such systems which are already in use admittedly allow individual entertainment and information units from the broadcast programme being transmitted by a source to be recorded and/or played back specifically. However, the subscriber cannot directly access the units transmitted by the transmitter or the source, as such. In systems such as these, access is thus essentially limited only to connection to a predetermined programme sequence, or to disconnection from it.

On the other hand, for example, GSM mobile radio systems have the capability to use a short message service (SMS). In this case, individual information blocks can be transmitted without having to be inserted into a programme via a programme sequence which can be predetermined.

It is to be expected that, in the future as well, demand for the capability to receive entertainment and information essentially in the form of traditional broadcast programmes will continue, in particular for reasons of convenience as well, even if it does not actually increase. As the range of media continuously increases, it is thus desirable to offer the facility of an increased range of information and entertainment programmes to subscribers in the field of available broadcasts, as well.

However, on the one hand, additional programme expansion, which is desired in particular by the providers, is essentially precluded with prior art broadcasting methods owing to the transmission channels which are available to the individual programme providers and the majority of which are already fully utilized.

On the other hand, with regard to increasing the range of programmes for individual subscribers, it is becoming more and more difficult to obtain an overview of the range of programmes on offer and to select individual entertainment programmes and/or information deliberately on the basis of its specific, individual interest.

One object of the invention is thus to provide a novel method, which is better than the prior art, for transmission of broadcasts, which makes it possible to ensure considerably more efficient utilization of available transmission channels, while at the same time allowing individual subscribers to make a more individual selection of a specific broadcast programme. A further object of the invention is to provide an apparatus which is suitable for carrying out the method, as well as a suitable apparatus for the reception of broadcasts transmitted using the method.

The inventive solutions of the said object have already been described by a method having the features of the independent Claim 1 and by apparatuses having the features of the independent Claims 10 and 13.

Advantageous and preferred developments and/or refinements are the subject matter of the respective dependent claims.

For the transmission of broadcast programmes, the invention accordingly provides for at least one first and one second signal sequence having defined signal characteristics to be provided and to be transmitted, in which case a large number of information blocks are embedded in the first signal sequence and control information referring to the individual information blocks is embedded in the second signal sequence, in such a way that a receiver device which is matched to the signal characteristics accesses the information block associated with the control information in response to control information being received.

In the field of broadcasting, this for the first time makes it possible to refer more than once to individual provided information blocks in order to form a number of different programmes by means of appropriate control information, that is to say the information blocks can be referred back to, thus resulting in a considerable reduction in the overall bandwidth required. It is also advantageous that this allows a large number of specialized programmes to be compiled to satisfy widely differing interests, without significantly having to increase the required bandwidth to do so. A subscriber can thus make a more individual selection of a specific broadcast programme.

In order to ensure sufficiently large channels for widely differing information blocks, the use of broadband technology is preferably envisaged for the transmission method.

Transmission may be in analogue and/or digital form, with digital transmission ensuring the advantage of additionally improved utilization of an overall available bandwidth.

The invention furthermore provides for transmission to take place with or without the use of cables, thus further increasing the flexibility in terms of utilization options and/or fields of operation.

In a further preferred refinement, the information blocks to be transmitted are embedded within defined transmission frames and/or transport protocols which are also, in particular, standardized, in particular in order to make it possible to identify the information blocks specifically, and to ensure a high level of compatibility.

The invention furthermore provides for each of the first and second signal sequences to be transmitted with at least one distinguishable characteristic in each case. On the one hand, this further simplifies the capability to use an appropriately adapted receiver device essentially to separate each signal sequence deliberately. On the other hand, it offers the advantage of making it considerably easier to transmit a large number of programmes on one channel. In a practical development in this context, the method according to the invention is carried out in the form of a multiplex method.

Based on a device, contained in the adapted receiver apparatus, for the storage and calling of information blocks, the invention furthermore provides for the information blocks to be transmitted asynchronously. One of the advantages in this case is that any retransmissions of information blocks which may be necessary for subsequent reference can be considerably reduced by subsequent appropriate control information, which in turn ensures more economic utilization.

The receiver apparatus is furthermore expediently suitable for interconnecting information blocks in accordance with the control information that they contain. The invention provides, in particular, for the method to be carried out using packet-switching transmission networks.

A preferred refinement of the broadcast transmission according to the invention furthermore provides for mutually associated first and second signal sequences to be produced by an individual transmission apparatus or, in particular for reasons of cost saving as well, by different transmission apparatuses.

The invention will be described in detail in the following text using preferred exemplary embodiments and with reference to the attached drawings, in which:
- Figure 1: shows the schematic illustration of an exemplary embodiment of the broadcasting method according to the invention,
- Figure 2: shows a schematic illustration, which illustrates the general principle of broadcasts, and
- Figure 3: shows the schematic illustration of a broadcasting method according to the prior art.

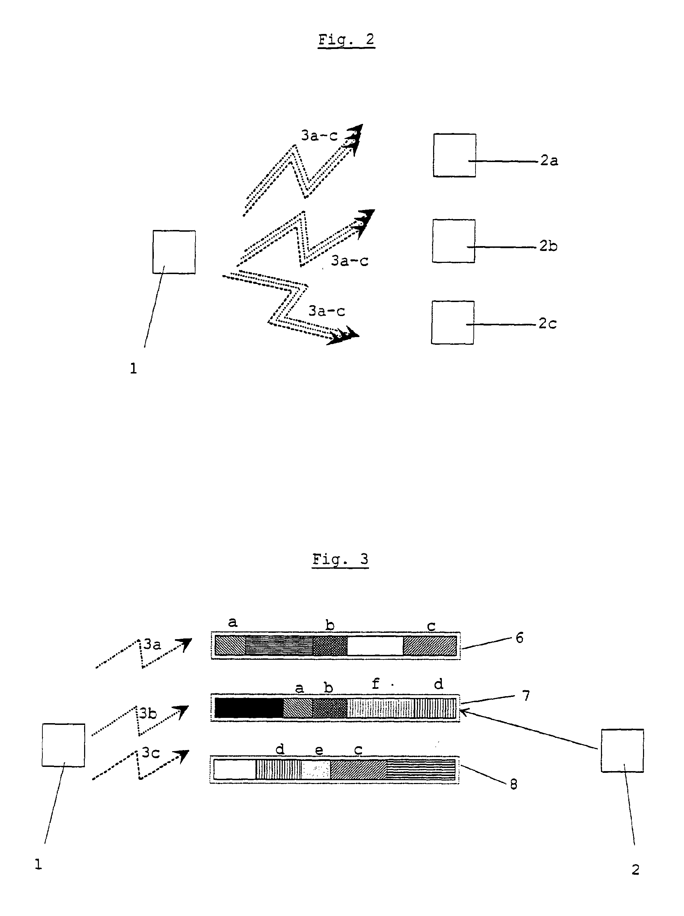

First of all, the following text refers to Figure 2, which uses the example of a broadcast radio transmission to illustrate schematically non-selective transmission of broadcast programmes.

Starting from a transmitter 1, a number of different broadcast programmes 3a to 3c are transmitted to a subscriber group whose size is essentially irrelevant. The only precondition for this is that the receiving devices 2a to 2c connected at the subscriber end are appropriately adapted for reception of the broadcasts transmitted by the transmitter 1, that is to say they belong to a specific class of receiving devices. Each broadcast programme 3a to 3c is in this case transmitted via a separate programme channel, and to all the receiving devices 2a to 2c. The selected broadcast programme is received by separation of a programme channel 3a, 3b or 3c.

Such a broadcast programme in this case essentially comprises a defined sequence of entertainment and/or information units, which are referred to in general form as an information unit for the following description. In other words, a broadcast programme is thus essentially composed of various information units and a programme structure which indicates the sequence in which the information units are organized.

Thus, for example, the radio transmitter 1 transmits the news at 0700 hrs on its first programme channel 3a, followed by a traffic block, followed by a song etc. On its second or third programme channel 3b or 3c, respectively, for example, the news is likewise transmitted first, followed by the traffic block, but then followed by a report, with the song being transmitted later.

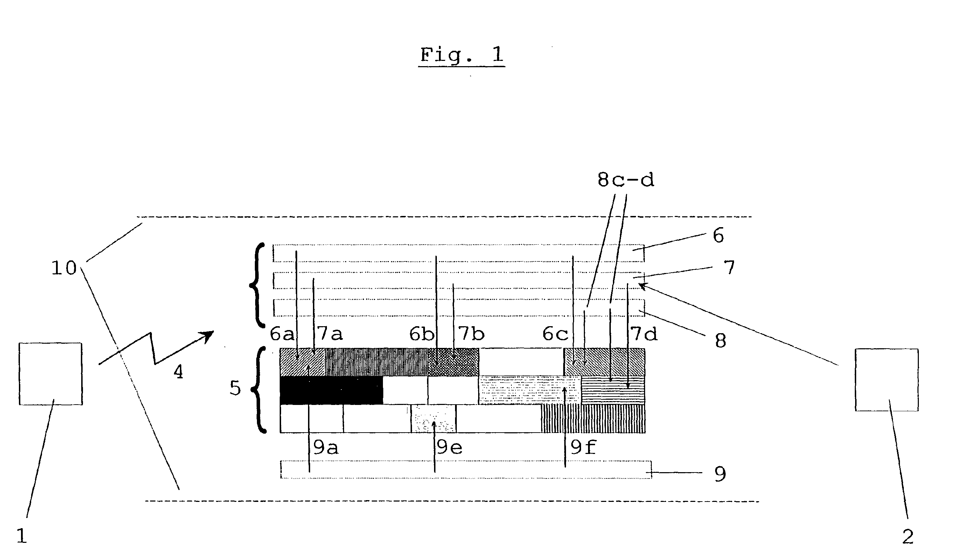

The principle of transmission of broadcasts 4 according to the invention is illustrated schematically in Figure 1. In order to transmit broadcasts 4, they are first of all essentially subdivided into two subunits to be transmitted.

One subunit 5 comprises a large number of individual information units, such as the news, comments, pieces of music and other reports. The second subunit according to Figure 1 comprises three different programme structures 6, 7 and 8. Each of these programme structures 6, 7 and 8 includes a sequence predetermined by the transmitter 1, on the basis of which individual information units from the subunit 5 can be composed to form programmes.

In its simplest form, each information unit is represented by a cohesive block, with the selected information blocks being joined together in a predetermined way in accordance with the received programme structure in the receiver 2, that is to say the respective information blocks are organized.

In order to transmit a desired number of subunits with programme structures 6, 7, 8 and subunits 5, starting from the transmitting device 1, a jointly used transmission channel 10 with an adequate overall bandwidth is provided in the example shown in Figure 1.

The subunits 5 with the information units and the subunits with the programme structures 6, 7 and 8 are in this case transmitted by the transmitter 1 as signal sequences which can in each case be distinguished from one another. The appropriately adapted receiver 2 separates a programme structure 7 and the received signal sequences and, at the same time, at least one signal sequence 5 with information blocks.

The more frequently it is possible to access individual information blocks, the more efficiently the transmission channel 10 can be used, as will be described in the following text by comparison with Figure 3.

Figure 2 schematically illustrates the composition of programmes for a previous broadcast system, in particular broadcast radio and television channels 3a to 3c. As has already been mentioned above, a programme is composed of the structure and the information items, some of which are shown by way of example. Each channel 3a, 3b and 3c thus transmits the information units a, b and c required for a corresponding programme, within the predetermined programme structure 6, the information units a, b, f and d within the structure 7, and the information units d, e and c, organized in accordance with structure 8. In this case, identical information units, for example a, b, c or d, are used simultaneously or else at different times by the various programme channels.

In the example according to the invention shown in Figure 1, on the other hand, all the information blocks are arranged together in a subunit 5 in the lower region of the transmission channel 10. Information blocks which are normally used by different programme channels are essentially transmitted only once more within a time window which can be defined, since the programme structures 6, 7 and 8 refer to them independently of one another. For example, the structure 6 makes reference to the blocks a, b and c, and the programme structure 7 makes reference to the information blocks a, b and d. Furthermore, the programme structure 8 makes reference to the blocks c and d. The free areas which are saved in this way thus result in improved utilization of the transmission channel 10.

Apart from the number of required information blocks in the subunit 5 saved as a consequence of this, the total number of programme structures 6, 7, 8 and 9 to be transmitted, in particular, is a critical factor for the overall bandwidth required for the transmission channel 10.

The signal sequences with the programme structures 6, 7 and 8 are arranged in the upper region of the transmission channel 10 and expediently essentially contain only control information, in particular such as the cross-references 6a, to 6c, 7a, 7b, 7d and 8c, 8d to individual information blocks. In comparison to the information blocks which are actually under consideration, such control information and data require a considerably smaller proportion of the overall transmission width. A large number of further such different programme structures, for example the programme structure 9, can thus be produced with only a slightly greater proportion of additional bandwidth, and these programme structures can additionally access already available information blocks, that is to say information blocks which are already part of the transmitted signal sequences. In the example, reference is made to the information blocks a, e and f via the control data in the signal sequence 9.

The control information or data which re-produce the programme structures 6, 7, 8 and 9, as well as the information blocks in the subunit 5 are embedded in defined transmission frames and are appropriately coded by means of different characteristics. The transmission frame, the transport protocol and/or the coding use, for example suitable algorithms to comply with an existing Standard, or a Standard that is still to be developed, in an expedient manner.

A large number of additional programme structures can thus be produced which then access the information blocks of other programme structures. These information blocks are already part of the transmission.

An individual provider or a group of providers can in consequence offer a large number of different programme structures, for example one with mixed information, one without the news, one for sport only, one for classical music only, and one for pop music only, without new information blocks or another broadcast channel 4 having to be provided. Thus, for example, a number of providers can also jointly use the information blocks made available by one provider, in order to compose their programmes.

The broadcast programmes may in this case be specialized such that the subscribers essentially receive their entirely specific broadcast programme via the receiving devices connected at the subscriber end.

Depending on the nature of the information blocks to be transmitted and the number of programme structures to be transmitted, appropriate capacities can be provided, in particular, by using broadband transmission channels.

Identification information is expediently added to the individual information blocks, opening up more far-reaching application options, for example deliberate selection of individual information blocks or classes of information blocks via an appropriately adapted receiving device.

It should be mentioned that the arrangement shown in Figure 1, in particular of the information blocks, was chosen only in order to simplify the illustration of the broadcast transmission method according to the invention in comparison with the previous transmission shown in Figure 3.

The receivers adapted for transmission according to the invention are in practice constructed with memory devices so that they can buffer-store information blocks which have already been received such that they can be called up. These stored information blocks can thus be used for subsequent reference, in particular by a different programme structure as well. In this case, asynchronous transmission of the individual information blocks makes it possible to avoid any subsequent retransmission of the information block which may be required for subsequent reference, or at least to delay it.

A time window within which asynchronously transmitted information blocks are accessed may, for example, vary with an order of magnitude of 5 to 10 minutes, or may be even longer, depending on the application and the specific configuration.

It should also be mentioned that, according to the invention, broadcasts may be transmitted both with and without the use of cables, or by a combination of both. Furthermore, the invention covers analogue and/or digital transmission of the individual programme components, that is to say essentially of the control data for a programme structure and of the information blocks.

The invention also includes, in particular, transmission in the form of packet transmission or packet-switching transmission, for example like the Internet. Information streams comprising information units and/or programme structures may thus overlap. Information units may also comprise more than just one information block. These are organized appropriately, for example on the basis of the identification features included in the information blocks, in particular in response to cross-reference or control signals received in the receivers.

In the same way, essentially all other types of transmission that are already in use or else which would not comply with Standard until some time in the future can also be used for the invention.

The invention thus covers broadcast transmissions which are essentially based on a physical channel which has sufficient bandwidth to transmit a large number of programmes. This physical channel is subdivided into different logical channels, which transmit the necessary information for individual programme structures and the information blocks separately.

If a provider, in particular a broadband provider, transmits a bundle of information blocks and programme structures which are joined together adequately in the receiver, this results in the predetermined programme, which corresponds to traditional broadcast programmes. The receiver which has been adapted for the method according to the invention receives, in practice, a large number of logical information streams, which comprise a number of information blocks and at least one programme structure. The information blocks are organized and/or buffer-stored, if necessary, by the receiver in accordance with a selected programme structure.

For appropriately designed receiver units, appropriate control information in the programme structure furthermore allows overlays and transitions between the individual blocks as well as the adaptation of other features, which correspond to those of traditional broadcast programmes, to be achieved.

For example, a received information block is played simultaneously to the end, that is to say, for example, a song is played to the final note. A second information block received at a different time during this period is played or overlaid immediately after this, with the receiver organizing these two separate blocks in accordance with the requirement, using the cross-reference data for the selected programme structure.

The bundling of information and the multiplexing of the transmission channels thus lead to high utilization of a transmission channel.

The scope of the invention also covers use of the Internet, or any other data network for transmission according to the invention. The fundamental principle of a plurality of logical channels also remains unchanged in this case. The logical channels are provided by suitable transport protocols. The use of different network concepts, for example a point-to-multipoint link, allows the resultant transmissions to be optimized.

## Claims

1. Method for the transmission of broadcasts, comprising the following method steps:
preparation and transmission of at least one first and one second signal sequence (5, 6, 7, 8, 9) having defined signal characteristics, in which case
a large number of information blocks are embedded in the first signal sequence (5), and
control information referring to individual information blocks is embedded in the second signal sequence (6, 7, 8, 9) in such a way that
a receiver device (2) which is matched to the signal characteristics accesses the information block associated with the control information in response to control information being received in a selected second signal sequence (6, 7, 8, 9).

2. Method according to Claim 1, in which the information blocks are embedded within a defined transmission frame and/or transport protocol.

3. Method according to Claim 1 or 2, in which the first and the second signal sequence (5, 6, 7, 8, 9) are each transmitted with at least one distinguishable characteristic.

4. Method according to one of Claims 1 to 3, in which the information blocks embedded in the first signal sequence (5) are transmitted asynchronously.

5. Method according to one of Claims 1 to 4, in which the transmission takes place in analogue and/or digital form.

6. Method according to one of Claims 1 to 5, in which the transmission takes place with or without the use of cables.

7. Method according to one of Claims 1 to 6, in which the method is carried out using broadband technology.

8. Method according to one of Claims 1 to 7, in which the method is carried out as a multiplex method.

9. Method according to one of Claims 1 to 8, in which the information blocks are transmitted in the form of packet transmission.

10. Apparatus for the transmission of broadcasts, in particular using the method according to one of Claims 1 to 9, **characterized by** a
device (1) for the production and transmission of at least one first signal sequence (5) having defined signal characteristics, in which a large number of information blocks are embedded, for access as required in response to control information in a second signal sequence (6, 7, 8, 9) which is transmitted with defined signal characteristics, and/or a
device (1) for the production and transmission of at least one second signal sequence (6, 7, 8, 9) having defined signal characteristics, in which control information is embedded which refers to individual information blocks in a first signal sequence (5) which is transmitted with defined signal characteristics.

11. Apparatus according to Claim 10, **characterized in that** the information blocks in the first signal sequence (5) are embedded within a defined transmission frame.

12. Apparatus according to Claim 10 or 11, **characterized by** a device for multiplexing at least one first and one second signal sequence (5, 6, 7, 8, 9) within a physical transmission channel.

13. Apparatus for the reception of broadcasts which are transmitted in particular using the method according to one of Claims 1 to 9, **characterized by** a
device (2) for the separation of a first signal sequence (5) with information blocks embedded in it from a number of first signal sequences having defined signal characteristics, a
device (2) for the separation of a second signal sequence (6, 7, 8, 9) containing control information, referring to individual information blocks, from a number of second signal sequences having defined signal characteristics, and a
device (2) for accessing an information block associated with specific control information, in response to such control information contained in the second signal sequence (6, 7, 8, 9).

14. Apparatus according to Claim 13, **characterized by** a device (2) for the storage and calling of information blocks.

15. Apparatus according to Claim 13 or 14, **characterized by** a device (2) for the reception of multiplex signal sequences.

16. Apparatus according to Claim 13, 14 or 15, **characterized by** a device (2) for the interconnection of information blocks of a first signal sequence (5) in accordance with the control information contained in the separated second signal sequence (6, 7, 8, 9).
